(19) Europäisches Patentamt
European Patent Office
Office européen des brevets

(11) Veröffentlichungsnummer: **0 008 044**
**B1**

(12) # EUROPÄISCHE PATENTSCHRIFT

(45) Veröffentlichungstag der Patentschrift: **30.06.82**

(51) Int. Cl.³: **C 08 G 18/10**, C 08 J 3/20, C 08 L 75/04

(21) Anmeldenummer: **79102677.6**

(22) Anmeldetag: **27.07.79**

(54) **Verfahren zur Herstellung von gegenüber Entmischung stabilisierten Füllstoffsuspensionen in Polyolen und deren Verwendung in einem Verfahren zur Herstellung von gegebenenfalls zellförmigen Polyurethankunststoffen.**

(30) Priorität: **08.08.78 DE 2834623**

(43) Veröffentlichungstag der Anmeldung: **20.02.80 Patentblatt 80/4**

(45) Bekanntmachung des Hinweises auf die Patenterteilung: **30.06.82 Patentblatt 82/26**

(84) Benannte Vertragsstaaten: **BE CH DE FR GB IT NL SE**

(56) Entgegenhaltungen:
**DE - A - 2 714 291**
**DE - B - 2 036 872**
**GB - A - 1 488 647**

**"Kunststoff-Handbuch" Band VII, 1966, Carl Hanser Verlag, S. 441.**

(73) Patentinhaber: **BAYER AG**
**Zentralbereich Patente, Marken und Lizenzen**
**D-5090 Leverkusen 1, Bayerwerk (DE)**

(72) Erfinder: **von Bonin, Wulf, Dr.**
**Mendelssohnstrasse 30**
**D-5090 Leverkusen (DE)**
Erfinder: **Vehlewald, Peter, Dr.**
**Fasanenstrasse 20**
**D-5653 Leichlingen (DE)**
Erfinder: **Illger, Hans-Walter, Dr.**
**Im Tentefeld 27**
**D-5064 Roesrath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 008 044 B1

# Verfahren zur Herstellung von gegenüber Entmischung stabilisierten Füllstoffsuspensionen in Polyolen und deren Verwendung in einem Verfahren zur Herstellung von gegebenenfalls zellförmigen Polyurethankunststoffen

Die vorliegende Erfindung betrifft eine Verfahren zur Stabilisierung von Suspensionen anorganischer Füllstoffpulver in Polyhydroxylverbindungen, insbesondere Polyätherpolyolen, gegenüber Entmischung. Die Stabilisierung der Füllstoffsuspensionen wird durch Umsetzung mit geringen Mengen an Polyisocyanaten bei erhöhter Temperatur erreicht, ohne daß die Verarbeitbarkeit der Suspensionen zu Polyurethankunststoffen beeinträchtigt wird.

Gemäß einem älteren Vorschlag können Suspensionen anorganischer Füllstoffe in Polyhydroxylverbindungen, insbesondere in Polyätherpolyolen, wie sie für die Herstellung geschäumter und ungeschäumter Polyurethankunststoffe Verwendung finden, gegen Entmischung geschützt werden, indem man sie mit einem Pfropfpolymerisat von $\alpha,\beta$-ungesättigten Carbonsäuren und gegebenenfalls weiteren Comonomeren auf vergleichbare Polyäther versetzt. Schon geringe Mengen dieser Pfropfpolymerisate wirken, bei Temperaturen unter 60°C der Füllstoffsuspension zugesetzt, als ausgezeichnete Stabilisatoren. Diese Methode der Stabilisierung läßt aber in zweierlei Hinsicht noch Wünsche offen: Einmal erfordert die Herstellung und Verwendung des Stabilisators die Einführung einer weiteren Komponente in das Sortiment der Chemikalien im Bereich der Polyurethanherstellung mit allen Problemen der Lagerhaltung und der Logistik und außerdem bringt der Stabilisator — wenn auch wenig, so doch merkbar — fremde reaktionsfähige Gruppen in die Polyurethan-Rezeptur und erfordert z.B. Neutralisationsmittel, neue Stabilisatoren bei der Verschäumung usw., was vom Endverarbeiter gern vermieden wird.

Es stellte sich daher die Aufgabe, die Stabilisierung von Suspensionen anorganischer Füllstoffe in Polyätherpolyolen ausschließlich mit den in der Praxis üblichen Chemikalien der Polyurethanherstellung zu bewerkstelligen.

Überraschenderweise ließ sich diese Aufgabe dadurch lösen, daß man Suspensionen von anorganischen Füllstoffen in Polyätherpolyolen mit Feststoffgehalten von vorzugsweise 10 bis 75 Gew.-% bei Temperaturen von ca. 30—200°C mit 0,1 bis 2 Gew.-% an Polyisocyanaten umsetzt. Dabei werden fließfähige, stabile Suspensionen erhalten, während z.B. das Arbeiten mit größeren Isocyanatmengen oder bei Raumtemperatur zu instabilen oder unerwünscht hochviskosen Suspensionen, z.B. über $10^4$ mPas, führt.

Selbstverständlich wurden in der Praxis bereits Abmischungen aus für die Polyurethanherstellung üblichen Polyolen und anorganischen Füllstoffen mit Polyisocyanaten umgesetzt. Hierbei wurden aber, abgesehen von anderen Mengenrelationen und Temperaturbedingungen, füllstoffhaltige Polyurethankunststoffe, seien sie nun hart oder elastomer, geschäumt oder ungeschäumt, hergestellt, nicht jedoch gegen Entmischung stabilisierte Suspensionen von anorganischen Füllstoffen in Polyetherpolyolen, die als eigenständiger Rohstoff zur Polyurethanherstellung dienen können.

In der GB—A 1 488 647 wurden zur Erhöhung der Lagerstabilität von NCO-haltigen Polyurethan-Kompositionen (die gegebenenfalls auch pigmenthaltig sein können), bestimmte Monoisocyanate zugesetzt. Es handelt sich dabei um besonders reaktive Monoisocyanate aus der Reihe von Oxycarbonylisocyanaten und/oder Alkoxycarbonylisocyanaten, welche mit Spuren von Wasser schnell abreagieren und somit die Wasserreaktion von NCO-haltigen Polyurethan-Kompositionen unter Viskositätserhöhung verhindern.

Gegenstand der Erfindung ist somit ein Verfahren zur Herstellung von gegenüber Entmischung stabilisierten Suspensionen anorganischer Füllstoffe in Polyhydroxylverbindungen, wie sie für die Polyurethanherstellung Verwendung finden, welches dadurch gekennzeichnet ist, daß man eine 0,5—80 gew.-%ige, vorzugsweise 10 bis 75 gew.-%ige, besonders bevorzugt 10 bis 50 gew.-%ige Suspension eines anorganischen Füllstoffs in einer Polyhydroxylverbindung mit einem Molekulargewicht von vorzugsweise 500 bis 10 000, besonders bevorzugt 1000 bis 7000, bei einer Temperatur von 30 bis 200°C, vorzugsweise zwischen 100 und 150°C, mit, bezogen auf Suspension, 0,1 bis 2 Gew.-% eines Polyisocyanats zur Bildung fließfähiger, stabilisierter Suspensionen mit einer Viskosität unterhalb von 10 000 mPas zur Umsetzung bringt.

Gegenstand der Erfindung ist schließlich auch die Verwendung der nach dem erfindungsgemäßen Verfahren zugänglichen stabilen Suspensionen als Aufbaukomponente bei der Herstellung von geschäumten und ungeschäumten Polyurethankunststoffen nach dem Isocyanat-Polyadditionsverfahren.

Unter dem Begriff "anorganische Füllstoffe" sollen im Rahmen der vorliegenden Erfindung auch die an sich bekannten anorganischen Pigmente verstanden werden. Es kommen auch solche anorganischen Füllstoffe in Betracht, deren Oberflächen mit organischen oder anorganischen Verbindungen mit neutralem, basischem oder saurem Charakter vorbehandelt worden sind, z.B. um deren Ladung oder Hydrophilie zu verändern. Die verwendeten Füllstoffe sind im wesentlichen feste anorganische Stoffe, deren Teilchengestalt die Form von Nadeln, Blättchen, Kugeln oder unregelmäßigen Teilchen haben kann, die amorph, metamorph oder kristallin sein können und deren Durchmesser bevorzugt im wesentlichen unter 10 $\mu$m liegt. Der Rückstand auf einem 40-$\mu$m-Sieb gemäß DIN 53 195 sollte vorzugsweise unter 1 Gew.-% betragen, der mittlere Teilchendurchmesser bevorzugt unter 5 $\mu$m liegen.

Geeignete solche Füllstoffe sind z.B. Kaoline, Talkum, Glimmer, Tuff, Lava, Asbestmehl, Glas, Kreide, Dolomit, Bentonite, Alkali- oder Ammoniumphosphate und -polyphosphate, Erdalkaliphosphate und -polyphosphate, Ruß, Graphit, Zemente, Calciumoxid und -hydroxid, Calciumsulfate, Flugaschen, Schlacken, Gesteinmehl, Titandioxid, Eisenoxide, Aluminiumoxide und -hydroxide, Quarz- und Schiefermehle, Kieselsäuren usw. Besonders gut geeignet sind für das erfindungsgemäße Verfahren neben Talkum, Bariumsulfat, Kaolin und Aluminiumoxidhydraten vorzugsweise Calciumcarbonat enthaltende Füllstoffe wie Kreide oder Dolomit.

Als Polyhydroxylverbindungen kommen vorzugsweise bei Raumtemperatur flüssige Polyole der in der Polyurethanchemie an sich bekannten Art in Frage. Diese Verbindungen weisen in der Regel 2 bis 8, vorzugsweise 2 oder 3, Hydroxylgruppen auf und liegen im Molekulargewichtsbereich zwischen 500 und 10 000, vorzugsweise zwischen 1000 und 7000. Es kommen jedoch auch Polyolgemische in Betracht, die neben Polyolen des genannten Molekulargewichtsbereiches auch solche mit einem geringeren Molekulargewicht, beispielsweise zwischen 62 und 500, enthalten, wobei diese jedoch vorzugsweise im Gemisch in Mengen von weniger als 70 Gew.-% vorliegen sollen. Bevorzugste Polyhydroxylverbindungen sind die den obigen Kriterien entsprechenden Polyhydroxypolyester, -polyäther, -polyacetale, -polycarbonate oder polyesteramide. Polyhydroxypolyäther sind besonders bevorzugt, da sie im allgemeinen relativ niedrigviskos sind. Auch Gemische der genannten Polyhydroxylverbindungen können eingesetzt werden. Es ist aber auch möglich, zunächst eine relativ hochkonzentrierte Suspension in einer einzigen Polyhydroxylverbindung erfindungsgemäß zu stabilisieren und diese stabilisierte Suspension erst später, vor den Verwendung als Polyolkomponente bei der Polyurethanherstellung, mit weiteren Polyhydroxylverbindung zu verscheiden.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis- glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. $\varepsilon$-Caprolacton, oder aus Hydroxycarbonsäuren, z.B. $\omega$-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Athylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolmin oder Athylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage.

Auch durch Polymerisation cyclischer Acetale wie z.B. Trioxan (DE-Offenlegungsschrift 1 694 128) lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 500—10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Als erfindungsgemäß gegebenenfalls mit einzusetzende Ausgangskomponenten kommen auch Verbindungen mit mindestens zwei Hydoxylgruppen und einem Molekulargewicht von 62—500 in Frage. Auch diese Verbindungen weisen in der Regel 2 bis 8 Hydroxylgruppen auf, vorzugsweise 2 bis 3 Hydroxylgruppen.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol)(1,2,6), Trimethyloläthan, Pentaerythrit, Chinit, Mannit und Sorbit, Ricinusöl, Diäthylenglykol, Triäthylenglkyol, Tetraäthylenglykol, höhere Polyäthylenglykole mit einem Molekulargewicht bis 500, Dipropylenglykol, höhere Polypropylenglykole mit einem Molekulargewicht bis 500, Dibutylenglykol, höhere Polybutylenglykole mit einem Molekulargewicht bis 500, 4,4'-Dihydroxy-diphenylpropan, Dihydroxymethyl-hydrochinon, Äthanolamin, Diäthanolamin, N-Methyldiäthanolamin und Triäthanolamin.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit) in Frage, wie sie bei der Selbstkondensation von Formaldehydhdyrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Im erfindungsgemäßen Verfahren können wie schon erwähnt, beliebige Gemische der obengenannten Polyhydroxylverbindungen eingesetzt werden. Gegebenenfalls können die Polyole auch mit weiteren Zusatzstoffen wie Kettenverlängerern, Stabilisatoren, Treibmitteln, Farbstoffen, Emulgatoren, Wasser etc. vermischt sein. Vorzugsweise sollen jedoch erfindungsgemäß unter dem Begriff Polyol bzw. Polyhydroxylverbindung die reinen Polyole verstanden werden.

Im Rahmen der vorliegenden Erfindung werden als Polyhydroxylverbindungen vorzugsweise Polyätherpolyole verwendet, da sie für die erfindungsgemaße Suspensionsherstellung besonders geeignet sind. Von besonderem Interesse sind hierbei solche Polyätherpolyole, die auf Basis von Propylenoxid oder Äthylenoxid bzw. deren Mischungen nach an sich bekannten Verfahren Interesse sind solche Molgewichte zwischen ca. 1000 und 7000 aufweisen. Von besonderem Interesse sind solche Polyätherpolyole, die zwischen 3 und 45 Gew.-%, vorzugsweise 10 bis 30 Gew.-%, Athylenoxid eingebaut enthalten. Hierbei kann das Äthylenoxid statistisch eingebaut sein, vorzugsweise befindet es sich aber entweder als Polymerblock an den Kettenenden des Polyätherpolyols oder als Mischblock, mit einem eingebauten Äthylenoxidanteil von mehr als 30 gew.-%, innerhalb der Kette des Polyätherpolyols. Mischformen zwischen den genannten Polyäthertypen sind naturgemäß ebenfalls in Betracht zu ziehen.

Die erfindungsgemäß erhältlichen stabilisierten Suspensionen anorganischer Füllstoffe in Polyolen enthalten zwischen etwa 0,5 und 80 Gew.-% an Füllstoff. Vorzugswese liegen die Füllstoffgehalte jedoch zwischen 10 und 75 Gew.-%, insbesondere zwischen 15 und 50 Gew.-%, bezogen auf gesamte Suspension.

Für Anwendungszwecke, bein denen eine erhöhte Viskosität der Suspension nicht prohibitiv wirkt, kommen auch höhere Füllstoffgehalte in Betracht.

Zur Herstellung der erfindungsgemäß stabilisierten Suspension wird der anorganische Füllstoff im Polyol suspendiert und dann, zweckmäßigerweise unter gutem Rühren, bei Temperaturen von 30 bis 200°C, bevorzugt 100—150°C, mit einem Polyisocyanat gegebenenfalls unter Feuchtigkeitsausschluß oder in einer Inertgasatmosphäre, umgesetzt.

Für das erfindungsgemäße Verfahren sind aliphatische, cycloaliphatische, araliphatische, aromatische und heterocyclische Polyisocyanate geeignet, wie sie z.B. von W. Siefken in Justus Liebigs Annalen der Chemie, 562, Seiten 75 bis 136, beschrieben werden, beispielsweise solche der Formel

$$Q\ (NCO)_n$$

in der
$n = 2$—4, vorzugsweise 2,
und
Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen,
oder einen araliphatischen Kohlenwasserstoffrest mit 8—15, vorzugsweise 8—13 C-Atomen,
bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330. Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschreiben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Obgleich prinzipiell die verschiedensten cycloaliphatischen (wie z.B. Hexamethylendiisocyanat oder Isophorondiisocyanat), araliphatischen und aromatischen Polyisocyanate stabilisierende Effekte zeigen, hat sich erwiesen, daß in besonderem Maße aromatische Polyisocyanate und in dieser Verbindungsklasse wieder insbesondere Einkern-Diisocyanate wie die isomeren Toluylendiisocyanate zur Stabilisierung der Suspensionen geeignet sind.

Zweckmäßigerweise wird erfindungsgemäß der anorganische Füllstoff in Mengen von 10—75 Gew.-%, vorzugsweise 10—50 Gew.-%, im Polyol bei 5—65°C suspendiert und dann sofort bzw. nach Erreichen der gewünschten Reaktionstemperatur mit dem Isocyanat verrührt. Es ist jedoch auch möglich, zunächst Polyol und Isocyanat, z.B. bei Raumtemperatur, zu mischen, dann den Füllstoff einzurühren und anschließend das Gemisch auf die Reaktionstemperatur zu erhitzen.

Die Reaktionszeiten liegen im bevorzugten Temperaturbereich von 100—150°C zwischen ca. 15 und 420 Minuten, vorzugsweise wird ca. 1 h bei der Reaktionstemperatur gerührt. Anschließend kann unter Rühren abgekühlt werden.

Die erfindungsgemäß stabilisierten Suspensionen können noch entgast, begast, getrocknet oder mit Zusatzstoffen versehen werden. Man kann ihnen auch weitere Füllstoffe oder füllstoffhaltige Polyole, etwa die sogenannten Polymerpolyole, zumischen. Sie sind auch geeignet als Ausgangsmaterial für die Herstellung anderer Typen von modifizierten Polyolen, etwa als Ausgangsmaterial zur Herstellung der sogenannten Polymerpolyole durch Aufpfropfen von z.B. Styrol/Acrylnitril-Gemischen (siehe z.B. die bereits erwähnten US-Patentanschriften 3 383 351, 3 304 351, 3 304 273, 3 523 093 und 3 011 695, sowie die Deutsche Patentschrift 1 152 536). In ihnen können aber auch in situ andere organische Füllstoffteilchen wie Polyharnstoffe oder Polyhydrazodicarbonamide hergestellt werden (siehe die Deutschen Auslegeschriften 1 168 075 und 1 260 142 sowie die Deutschen Offenlegungsschriften 2 324 134, 2 423 984, 2 512 385, 2 513 815, 2 550 796, 2 550 797, 2 550 833 und 2 550 862). Die erfindungsgemäßen Suspensionen sind besonders wertvolle Ausgangsmaterialien zur Herstellung von Polyurethanen nach dem Isocyanat-Polyadditionsverfahren, da in ihnen keine gegebenenfalls zu Störungen bei der Polyurethanherstellung Anlaß gebenden Hilfsmittel enthalten sind. Sie eignen sich sowohl zur Herstellung von weichen, harten oder halbharten geschäumten Polyurethankunststoffen als auch zur Herstellung von nichtgeschäumten Polyurethanen, beispielsweise von Polyurethanelastomeren, -thermoplasten oder -duromeren.

Gegenstand der Erfindung ist somit auch ein Verfahren zur Herstellung von gegebenenfalls zellförmigen Polyurethankunststoffen durch Umsetzung von

A) Polyisocyanaten mit

B) anorganische Füllstoffe enthaltenden Polyhydroxylverbindungen mit einem Molekulargewicht zwischen 500 und 10000, sowie gegebenenfalls

C) weiteren gegenüber Isocyanaten reaktiven Verbindungen, gegebenenfalls in Gegenwart von

D) Katalysatoren, Treibmitteln und weiteren an sich bekannten Zusatzstoffen,

welches dadurch gekennzeichnet ist, daß als Komponente B) die erfindungsgemäß stabilisierten Suspensionen eingesetzt werden.

Als Komponente A) kommen in diesem Zusammenhang alle schon obengenannten Polyisocyanate in Betracht. Als Komponente C) können neben den oben beschriebenen (keine anorganische Füllstoffe enthaltenden) nieder- und höhermolekularen Polyolen insbesondere auch aliphatische und aromatische Diamine als Kettenverlängerungsmittel eingesetzt werden.

Erfindungsgemaß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1 770 591), Semicarbazidoalkylencarbazinester wie z.B. 2-Semicarbazidoäthyl-carbazinester (DE-Offenlegungsschrift 1 918 504)

oder auch Amino-semicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin-bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in DE-Offenlegungsschriften 1 803 635 (US Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Erfindungsgemäß gegebenenfalls mitzuverwendende Hilfs- und Zusatzmittel (Komponente D) sind beispielsweise:

a) Wasser und/oder leicht flüchtige anorganische oder organische Substanzen als Treibmittel. Als organische Treibmittel kommen z.B. Aceton, Äthylacetat, halogen-substituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmittel sowie Einzelheiten über die Verbindung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyl-äthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 286, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367); US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Beretracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in den US-patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens zur Herstellung von Polyurethankunststoffen:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt.

Man kann aber auch so arbeiten, daß man mehr schäumfähiges Reaktionsgemsich in die Form einträgt, als zur Ausfüllung des Forminneren mit Schaumstoff notwendig ist. Im letztgenannten Fall

wird somit unter "overcharging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die folgenden Beispiele dienen der Erläuterung der Erfindung; die angegebenen Prozente und Teile beziehen sich auf das Gewicht, falls nichts anderes vermerkt ist.

Die in den Beispielen verwendeten Füllstoffpulver haben einen oberen Schnitt von 10 $\mu$m, einen mittleren Teilchendurchmesser von ca. 3 $\mu$m und einen Anteil feiner als 2 $\mu$m von ca. 40%.

Füllstoff 1 = Kaolin
Füllstoff 2 = Barytweiß
Füllstoff 3 = Kreide.

Folgende Polyole werden in den Beispielen verwendet:

Polyol 1
Polyäther, gestartet auf einem Gemisch Glyzerin/Propylenglykol; eingebaut enthaltend 10% Äthylenoxid und ca. 90% Propylenoxid; nahezu frei von primären OH-Gruppen; OH-Zahl: 46.

Polyol 2
Auf Trimethylolpropan gestarteter Polyäther aus ca. 80% Propylenoxid und ca. 20% Äthylenoxid; OH-Zahl: 45.

Polyol 3
Auf Trimethylolpropan gestarteter Polyäther aus ca. 83% Propylenoxid (als Block eingebaut) und ca. 17% Äthylenoxid, enthaltend im wesentlichen primäre OH-Gruppen; OH-Zahl: 28.

Polyol 4
Auf Glyzerin gestarteter Polyäther aus ca. 87% Propylenoxid (als Block eingebaut) und ca. 13% Äthylenoxid, enthaltend im wesentlichen primäre OH-Gruppen; OH-Zahl: 28.

Polyol 5
Auf Trimethylolpropan gestarteter Polyäther aus ca. 60% Äthylenoxid und ca. 40% Propylenoxid, enthaltend im wesentlichen sek. OH-Gruppen; OH-Zahl: 26.

Polyol 6
Wie Polyol 3, aber mit einer OH-Zahl von 34.

Folgende Polyisocyanate werden in den Beispielen eingesetzt.

Isocyanat 1
Technisches 1,6-Hexamethylendiisocyanat.

Isocyanat 2
Technisches 4,4'-Diphenylmethandiisocyanat.

Isocyanat 3
Technisches Toluylendiisocyanat, enthaltend ca. 80% 2,4-Isomeres.

Isocyanat 4
Technisches Toluylendiisocyanat, enthaltend ca. 65% 2,4-Isomeres.

Isocyanat 5
Toluylendiisocyanat, enthaltend ca. 100% 2,4-Isomeres.

Die Viskositäten wurden mit einem Rotationsviskosimeter bei 22°C gemessen, zuvor wurde die Suspension gut durchgerührt.

Beurteilung: 1 = < 5000 mPa (22°C)
2 = <10000 mPa (22°C)
3 = >10000 mPa (22°C)

Die Herstellung der Suspensionen erfolgte nach folgender allgemeiner Vorschrift:

300 Teile Füllstoff werden mit 700 Teilen Polyol gut bei Raumtemperatur verrührt. Dann erhitzt man die Suspension auf die angegebene Temperatur und gibt die jeweilige Menge des Polyisocyanates unter intensivem Rühren hinzu. Nunmehr wird 1 Stunde intensiv bei 120°C nachgerührt, dann unter Rühren abgekühlt. Das Mengenverhältnis von Füllstoff zu Polyol ist variierbar; das Isocyanat kann mit gutem Erfolg auch vor dem Erhitzen, d.h. bei Raumtemperatur zugesetzt werden.

Die Sedimentationsprüfung wurde wie folgt vorgenommen: Die Suspension wurde in ein Prüfrohr mit 5 cm Durchmesser und 10 cm Höhe eingefüllt und 72 Stunden bei 75°C getempert. Sodann wurde am Kopf des Prüfrohres auf Serumabscheidung geprüft. Anschließend wurde das Prüfrohr umgedreht, d.h. auf den Kopf gestellt und der gegebenenfalls am ehemaligen Prüfrohrboden hinterbleibende Sedimentationsschlamm beurteilt.

Zum Vergleich wurden gleichartige, jedoch ohne Isocyanatzusatz hergestellte Suspensionen beurteilt:

| | |
|---|---|
| 1 = sehr gute Stabilität | (<1 mm Abscheidung) |
| 2 = gute Stabilität | (<3 mm Abscheidung) |
| 3 = ausreichende Stabilität | ( 3—5 mm Abscheidung) |
| 4 = nicht ausreichende Stabilität | (>5 mm Abscheidung) |

Die Versuchsergebnisse sind in der folgenden Tabelle zusammengestellt:

| Beispiel Nr. | V 1 | 2 | V 3 | 4 | V 5 | V 6 | V 7 | V 8 | V 9 | V 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|
| Fullstoff | 1 | 1 | 2 | 2 | 3 | 3 | 3 | 3 | 3 | 3 | 3 | 3 | 3 | 3 | 3 | 3 | 3 | 3 | 3 | 3 | 3 | 3 |
| % bezogen auf Suspension | 25 | 25 | 60 | 60 | 30 | 30 | 30 | 30 | 30 | 30 | 30 | 30 | 30 | 30 | 30 | 20 | 40 | 30 | 30 | 30 | 30 | 30 |
| Polyol | 4 | 4 | 5 | 5 | 1 | 2 | 3 | 4 | 5 | 6 | 3 | 4 | 4 | 4 | 2 | 3 | 2 | 1 | 2 | 3 | 4 | 6 |
| Isocyanat | – | 3 | – | 3 | – | – | – | – | – | – | 1 | 5 | 2 | 4 | 4 | 3 | 3 | 3 | 3 | 3 | 3 | 3 |
| % bezogen auf Suspension | – | 1,5 | – | 1 | – | – | – | – | – | – | 2 | 1 | 1,5 | 0,35 | 0,4 | 0,5 | 1 | 0,7 | 1 | 0,4 | 0,5 | 0,7 |
| zugesetzt bei °C | – | 25 | – | 25 | – | – | – | – | – | – | 120 | 120 | 25 | 25 | 25 | 120 | 25 | 25 | 25 | 25 | 25 | 25 |
| Viskositat | 1 | 1 | 2 | 2 | 1 | 1 | 1 | 1 | 1 | 1 | 2 | 2 | 2 | 2 | 1 | 2 | 1 | 1 | 1 | 2 | 2 | 1 |
| Abscheidung Serum | 4 | 2 | 4 | 2 | 4 | 4 | 3 | 4 | 4 | 4 | 2 | 1 | 1 | 1 | 1 | 1 | 1 | 1 | 1 | 1 | 1 | 1 |
| Abscheidung Sediment | 3 | 2 | 4 | 2 | 4 | 4 | 4 | 4 | 4 | 4 | 1 | 1 | 2 | 1 | 1 | 1 | 1 | 1 | 1 | 1 | 1 | 1 |

V = Vergleichsversuch.

Die folgenden Beispiele beschreiben die Verwendung der erfindungsgemäß stabilisierten Suspensionen zur Herstellung von Polyurethanschaumstoffen. Die Komponenten der in der nachstehenden Tabelle angegebenen Rezepturen wurden bei Raumtemperatur intensiv vermischt und danach frei aufschäumen gelassen. Die so erhaltenen Schaumstoffe haben das Raumgewicht konventioneller Polyätherschaumstoffe (ca. 40 kg/m3), weisen jedoch eine verringerte Brandlast /kg auf.

Folgende Ausgangskomponenten werden (neben den bereits oben beschrieben) in den Schaumrezepturen eingesetzt:

| | |
|---|---|
| Katalysator 1: | Bis-[β-(N,N-dimethylamino)-äthyl]-äther |
| Katalysator 2: | Diazabicyclooctan (Triäthylendiamin) |
| Katalysator 3: | Gemisch aus 5 Teilen 2,2,4-Trimethyl-2-silamorpholin, 35 Teilen Dimethylaminoäthanol, 60 Teilen permethyliertem Aminoäthylpiperazin |
| Katalysator 4: | N-Methylmorpholin |
| Stabilisator 1: | Methylphenylpolysiloxan der Formel |

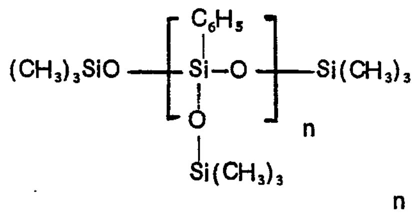

n = 1–3

| | |
|---|---|
| Stabilisator 2: | Polyäther-Polysiloxan-Blockpolymeres (Tegostab B 4617 der Goldschmidt AG, Essen, BRD) |
| Stabilisator 3: | Polyäther-Polysiloxan-Blockpolymeres (OS 22 der Bayer AG, BRD) |
| Isocyanat 6: | Gemisch aus 80 Teilen Isocyanat 3 und 20 Teilen Isocyanat 2. |

Die Zahlenwerte in der Verschäumungsrezepturen der nachstehenden Tabelle sind Gewichtsteile.

| Beispiel | | 23 | 24 | 25 | 26 | 27 | 28 | 29 |
|---|---|---|---|---|---|---|---|---|
| Suspension nach Beispiel 18 | | 100 | | | | | | |
| 19 | | | 33,3 | 50 | 66,7 | | | |
| 20 | | | | | | 33,3 | | |
| 21 | | | | | | | 50 | 66,7 |
| Polyol 4 | | | 66,7 | 50 | 33,3 | 66,7 | 50 | 33,3 |
| Wasser | | 3,0 | 2,9 | 2,9 | 2,9 | 2,9 | 2,9 | 2,9 |
| Katalysator 1 | | | 0,1 | 0,1 | 0,1 | 0,1 | 0.1 | 0,1 |
| Katalysator 2 | | | 0,5 | 0,5 | 0,5 | 0,5 | 0,5 | 0,5 |
| Katalysator 3 | | 0,1 | | | | | | |
| Katalysator 4 | | | 0,8 | 0,8 | 0,8 | 0,8 | 0,8 | 0,8 |
| Stabilisator 1 | | | 1,0 | 1,0 | 1,0 | 1,0 | 1.0 | 1,0 |
| Stabilisator 2 | | | 0,1 | 0,1 | 0,1 | 0,1 | 0.1 | 0,1 |
| Stabilisator 3 | | 0,8 | | | | | | |
| Dibutylzinndilaurat | | | 0,03 | 0,03 | 0,03 | 0,03 | 0,03 | 0,03 |
| Zinndioctoat | | 0,25 | | | | | | |
| Isocyanat 3 | | 36,6 | | | | | | |
| Isocyanat 6 | | | 36,2 | 36,3 | 36,4 | 35,6 | 35,3 | 35,1 |
| Rohdichte (kg/m³) | | 45 | 40 | 39 | 39 | 39 | 40 | 40 |
| Zugfestigkeit (KPa) nach DIN | 53571 | | 135 | 141 | 138 | 134 | 139 | 141 |
| Dehnung (%) nach DIN | 53571 | | 184 | 172 | 154 | 182 | 176 | 154 |
| Stauchhärte (KPa) nach DIN | 53577 | | 3,4 | 4,1 | 4,6 | 3,2 | 3,7 | 3,9 |
| Druckverformungsrest (90%) nach DIN | 53572 | | 9,4 | 13,5 | | 8,0 | 8,5 | 9,0 |

**Patentansprüche**

1. Verfahren zur Herstellung von gegenüber Entmischung stabilisierten Suspensionen anorganischer Füllstoffe in Polyhydroxylverbindungen, wie sie für die Polyurethanherstellung als Rohstoff Verwendung finden, dadurch gekennzeichnet, daß man 0,5 bis 80 gew.-%ige Suspension eines anorganischen Füllstoffs in einer Polyhydroxylverbindung mit einem Molekulargewicht zwischen 500 und 10 000 bei einer Temperatur von 30 bis 200°C mit, bezogen auf die Suspension, 1,0 bis 2 Gew.-% eines Polyisocyanats zur Bildung fließfähiger, stabilisierter Suspensionen mit einer Viskosität unterhalb von 10 000 mPas zur Umsetzung bringt.

2. Verfahren nach Anspruch 1, dadurch gekennzeichnet, daß man eine 10 bis 75 gew.-%ige Suspension eines anorganischen Füllstoffs in einem Polyhydroxypolyether mit einem Molekulargewicht zwischen 1000 und 7000 mit 0,1 bis 2 Gew.-%, bezogen auf Suspension, eines Polyisocyanats innig vermischt und bei einer Temperatur zwischen 100 und 150°C umsetzt.

3. Verfahren nach Ansprüchen 1 und 2, dadurch gekennzeichnet, daß man als Polyisocyanate aromatische Einkern-Diisocyanate verwendet.

4. Verfahren nach Ansprüchen 1 bis 3, dadurch gekennzeichnet, daß man eine 20 bis 50 gew.-%ige Suspension von Kreidepulver mit einer Teilchengröße unter 10 μm in eime Polyhydroxypolyether mit einem Molekulargewicht zwischen 1000 und 7000 mit 0,1 bis 2 Gew.-%, bezogen auf Suspension, an Toluylendiisocyanat innig vermischt und bei 100 bis 150°C unter gutem Rühren zur Umsetzung bringt.

5. Verfahren zur Herstellung von gegebenenfalls zellförmigen Polyurethankunststoffen durch Umsetzung von

A) Polyisocyanaten mit

B) anorganische Füllstoffe enthaltenden Polyhydroxylverbindungen mit einem Molekulargewicht zwischen 500 und 10 000, sowie gegebenenfalls.

C) weiteren gegenüber Isocyanaten reaktiven Verbindungen, gegebenenfalls in Gegenwart von

D) Katalysatoren, Treibmitteln und weiteren an sich bekannten Zusatzstoffen,

dadurch gekennzeichnet, daß als Komponente B) die nach Ansprüchen 1 bis 4 erhaltenen stabilisierten Suspensionen eingesetzt werden.

**Claims**

1. Process for the production of non-disintegrating suspensions of inorganic fillers in polyhydroxyl compounds of the type used as raw material for the production of polyurethanes, characterised in that a 0.5 to 80% by weight suspension an inorganic filler in a polyhydroxyl compound with a molecular weight between 500 and 10,000 is reacted with 0.1 to 2% by weight of a polyisocyanate, based on the suspension, at a temperature of 30 to 200°C, for the formation of flowable, stabilised suspensions with a viscosity of less than 10,000 mPa.

2. Process according to Claim 1, characterised in that a 10 to 75% by weight suspension of an inorganic filler in a polyhydroxy polyether having a molecular weight of between 1,000 and 7,000 is thoroughly mixed with 0.1 to 2% by weight, based on suspension, of a polyisocyanate and the resulting mixture is reacted at a temperature between 100 and 150°C.

3. Process according to Claims 1 and 2, characterised in that aromatic mononuclear diisocyanates are used as the polyisocyanates.

4. Process according to Claims 1 to 3, characterised in that a 20 to 50% by weight suspension of chalk powder having a particle size of less than 10 μm in a polyhydroxy polyether having a molecular weight between 1,000 and 7,000 is thoroughly mixed with 0.1 to 2% by weight, based on suspension, of tolylene diisocyanate and the resulting mixture is reacted with thorough stirring at 100 to 150°C.

5. Process for the production of optionally cellular polyurethane plastics by reacting

A) polyisocyanates with

B) polyhydroxyl compounds containing inorganic fillers and having a molecular weight of between 500 and 10,000, and, optionally

C) other isocyanate-reactive compounds, optionally in the presence of

D) catalysts, blowing agents and other additives known per se, characterised in that the stabilised suspensions obtained in accordance with Claims 1 to 4 are used as component B).

**Revendications**

1. Procédé de préparation de suspensions de charges inorganiques dans des composés polyhydroxy, stabilisées contre la démixtion, par exemple, les suspensions utilisées comme matières premières pour la fabrication des polyuréthanes, caractérisé en ce qu'on fait réagir une suspension à

0,5—80% en poids d'une charge inorganique dans un composé polyhydroxy d'un poids moléculaire se situant entre 500 et 10.000, à une température de 30 à 200°C, avec (calculé sur la suspension) 0,1 à 2% en poids d'un polyisocyanate pour la formation de suspensions fluides et stabilisées d'une viscosité inférieure à 10.000 mPas.

2. Procédé suivant la revendication 1, caractérisé en ce qu'on mélange intimement une suspension à 10—75% en poids d'une charge inorganique dans un polyhydroxy-polyéther d'un poids moléculaire se situant entre 1.000 et 7.000, avec 0,1 à 2% en poids (calculé sur la suspension) d'un polyisocyanate et on fait réagir à une température se situant entre 100 et 150°C.

3. Procédé suivant les revendications 1 et 2, caractérisé en ce que, comme polyisocyanates, on utilise des diisocyanates mononucléaires aromatiques.

4. Procédé suivant les revendications 1 à 3, caractérisé en ce qu'on mélange intimement une suspension à 20—50% en poids de craie en poudre d'une granularité inférieure à 10 $\mu$m dans un polyhydroxypolyéther d'un poids moléculaire se situant entre 1.000 et 7.000, avec 0,1 à 2% en poids (calculé sur la suspension) de toluylène-diisocyanate et l'on fait réagir à une température de 100 à 150°C tout en agitant vigoureusement.

5. Procédé de fabrication de matières synthétiques de polyuréthanes éventuellement cellulaires en faisant réagir:

A) des polyisocyanates avec

B) des composés polyhydroxy contenant des charges inorganiques et ayant un poids moléculaire se situant entre 500 et 10.000, ainsi qu'éventuellement

C) d'autres composés réactifs vis-à-vis des isocyanates, éventuellement en présence.

D) de catalyseurs, d'agents moussants et d'autres additifs connus en soi,

caractérisé en ce que, comme composant B), on utilise les suspensions stabilisées obtenues suivant les revendications 1 à 4.